**Europäisches Patentamt**

**European Patent Office**

**Office européen des brevets**

(19)

(11) Veröffentlichungsnummer: **0 129 048**
**A2**

(12) # EUROPÄISCHE PATENTANMELDUNG

(21) Anmeldenummer: **84105409.1**

(22) Anmeldetag: **12.05.84**

(51) Int. Cl.³: **G 02 B 7/26**

(30) Priorität: **18.06.83 DE 3321988**

(43) Veröffentlichungstag der Anmeldung:
**27.12.84 Patentblatt 84/52**

(84) Benannte Vertragsstaaten:
**AT BE CH DE FR GB IT LI LU NL SE**

(71) Anmelder: **International Standard Electric Corporation
320 Park Avenue
New York New York 10022(US)**

(84) Benannte Vertragsstaaten:
**BE CH FR GB IT LI LU NL SE AT**

(71) Anmelder: **Standard Elektrik Lorenz Aktiengesellschaft
Hellmuth-Hirth-Strasse 42
D-7000 Stuttgart 40(DE)**

(84) Benannte Vertragsstaaten:
**DE**

(72) Erfinder: **Rossberg, Rolf
Thüringer Strasse 17
D-7141 Schwieberdingen(DE)**

(74) Vertreter: **Gähr, Hans-Dieter, Dipl.-Ing. (FH) et al,
c./o.Standard Elektrik Lorenz AG Patent- und
Lizenzwesen Postfach 300 929 Kurze Strasse 8
D-7000 Stuttgart 30(DE)**

(54) **Vorrichtung zum spielfreien Verschieben von Objekten in einem Koordinatensystem.**

(57) Bei der Vorrichtung bestehen das Basis- und die Schwenkteile aus drei mit Abstand übereinander angeordneten Platten. Dies sind eine Grundplatte (1), eine Zwischenplatte (3) und eine Trägerplatte (5). Die Grundplatte (1) ist über ein im Bereich einer Längsseite vorgesehenes erstes Gelenk (2) mit der darüber angeordneten Zwischenplatte (3) verbunden, die ihrerseits im Bereich auf der dem ersten Gelenk (2) gegenüberliegenden Längsseite über ein zweites Gelenk (4) mit der darüber angeordneten Trägerplatte (5) verbunden ist.

Zwischen- und Trägerplatte (3, 5) sind gemeinsam um die Schwenkachse des ersten Gelenkes (2) und die Trägerplatte allein um die Schwenkachse des zweiten Gelenkes (4) bewegbar. In der Trägerplatte (5) ist die Objektaufnahme (8) enthalten, deren Mittelachse mit der Objektachse übereinstimmt. Die Positionen dieser Mittelachse und der Schwenkachsen sind in den Eckpunkten eines rechtwinkligen Dreiecks angeordnet, wobei der Abstand der Schwenkachsen die Hypothenuse des Dreiecks bildet. Die Schwenkachsen der Gelenke (2, 4) und die Mittelachse der Objektaufnahme (8) sind in horizontaler und in vertikaler Richtung zueinander versetzt angeordnet.

Fig.1

EP 0 129 048 A2

0129048

R.Roßberg-10/11

Vorrichtung zum spielfreien Verschieben von Objekten
in einem Koordinatensystem

Die Erfindung betrifft eine Vorrichtung der im Oberbegriff
des Anspruchs 1 näher bezeichneten Ausführung.

Eine solche Vorrichtung ist aus der DE-PS 28 39 753 bekannt. Sie besteht im wesentlichen aus einem leiterartigen, drei Querstege aufweisenden Rahmen, dessen mittlerer Quersteg zwei Lagerspitzen enthält, auf denen eine erste Wippe ruht. Ein Wippenende ist druckfederbelastet, wodurch das andere Wippenende federnd gegen eine in einer Abdeckplatte des Rahmens steckende Justierschraube angedrückt wird. Die erste Wippe überdeckt ein brückenähnliches Oberteil. Zwischen diesem Oberteil und dem ebenfalls Lagerspitzen aufweisenden Unterteil ist eine das Justierobjekt enthaltende zweite Wippe vorgesehen, deren eines Ende ebenfalls druckfederbelastet ist und deren anderes Ende wiederum federnd gegen die ihr zugeordnete Justierschraube angedrückt wird, welche im Oberteil der ersten Wippe steckt.

Der Erfindung liegt die Aufgabe zugrunde, eine dem Oberbegriff des Anspruchs 1 entsprechende Vorrichtung zu schaffen, die aus möglichst wenigen sowie einfachen Einzelteilen zu-

ZT/P1-Ka/V

08.05.1984

0129048

R.Roßberg-10/11

sammensetzbar ist und deren Einzelteile sich außerdem besonders wirtschaftlich herstellen lassen. Diese Aufgabe wird erfindungsgemäß durch die im kennzeichnenden Teil dieses Anspruchs angegebenen konstruktiven Maßnahmen gelöst. Vorteilhafte Ausgestaltungen und Verwendungen des Gegenstandes nach Anspruch 1 sind den Unteransprüchen zu entnehmen.

Mit der Vorrichtung sind verschiedene Vorteile erzielbar. Sie weist Verschiebewege auf, die im Bereich von Mikrometern bis zu Millimetern liegen. Daher lassen sich die in den entsprechenden Aufnahmen fixierten Objekte sehr genau positionieren. Präzisionsteile werden hierzu nicht benötigt. Selbst bei den geschliffenen Oberflächen der Grundplatten und des zylindrischen Stabes genügt das Einhalten üblicher Fertigungstoleranzen, weil es auf die Dickenabmessung und den Durchmesser nicht ankommt. Die Vorrichtung ist mechanisch robust sowie unempfindlich gegen Verschmutzung. Sie unterliegt praktisch keinem Verschleiß und zeichnet sich daher durch eine hohe Lebensdauer aus. Weitere Vorteile sind in der Beschreibung angegeben.

Die Erfindung wird anhand von in Zeichnungen dargestellten Ausführungsbeispielen wie folgt erläutert:

Fig. 1    Eine Vorrichtung mit Aufnahme zum Justieren von Lichtwellenleitern, in der Vorderansicht;

Fig. 2    eine als Spleißverbinder ausgebildete Vorrichtung mit darin fixierten Lichtleitkabeln, in einer Seitenansicht;

Fig. 3    die Vorrichtung gemäß Schnittlinie A-A der Fig. 2, in perspektivischer Ansicht;

Fig. 4    die Vorrichtung der Fig. 2 gemäß Linie A-A, quergeschnitten dargestellt;

Fig. 5    eine als Steckverbinder ausgebildete Vorrichtung
mit darin fixiertem Lichtleitkabel, in perspektivischer Ansicht;

Fig. 6    die Vorrichtung der Fig. 5 in eine Fassung eingesetzt, teilweise quergeschnitten;

Fig. 7    die in ein optisches Dämpfungsglied eingesetzte Vorrichtung mit angeschlossenen Lichtleitkabeln, teilweise geschnitten, in der Seitenansicht;

Fig. 8    die Vorrichtung im Dämpfungsglied der Fig. 7 mit
quergeschnittener Abdeckung, in der Vorderansicht;

Fig. 9    eine auf der Grundplatte eines optischen Bauteiles
angeordnete Vorrichtung, gemäß Schnittlinie A-A der
Fig.10, in perspektivischer Ansicht;

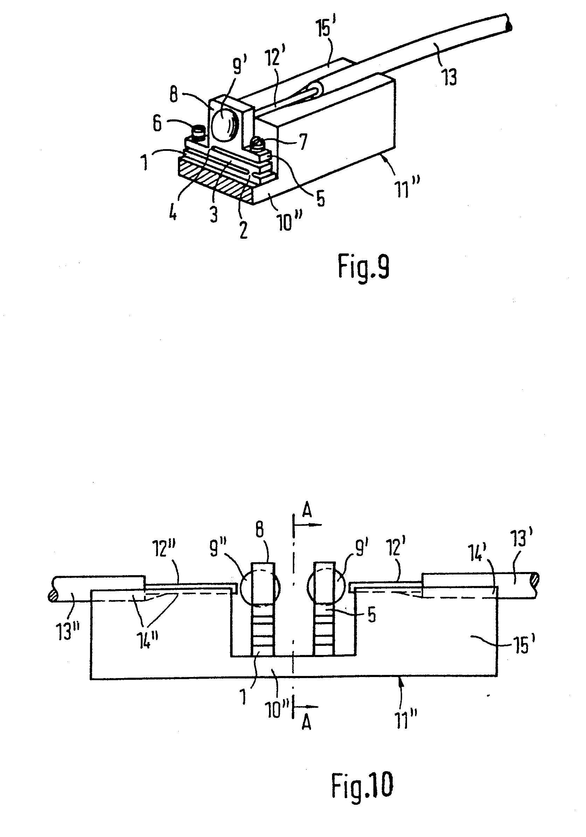

Fig.10    zwei auf der Grundplatte eines optischen Bauteiles
angeordnete Vorrichtungen, in einer Seitenansicht.

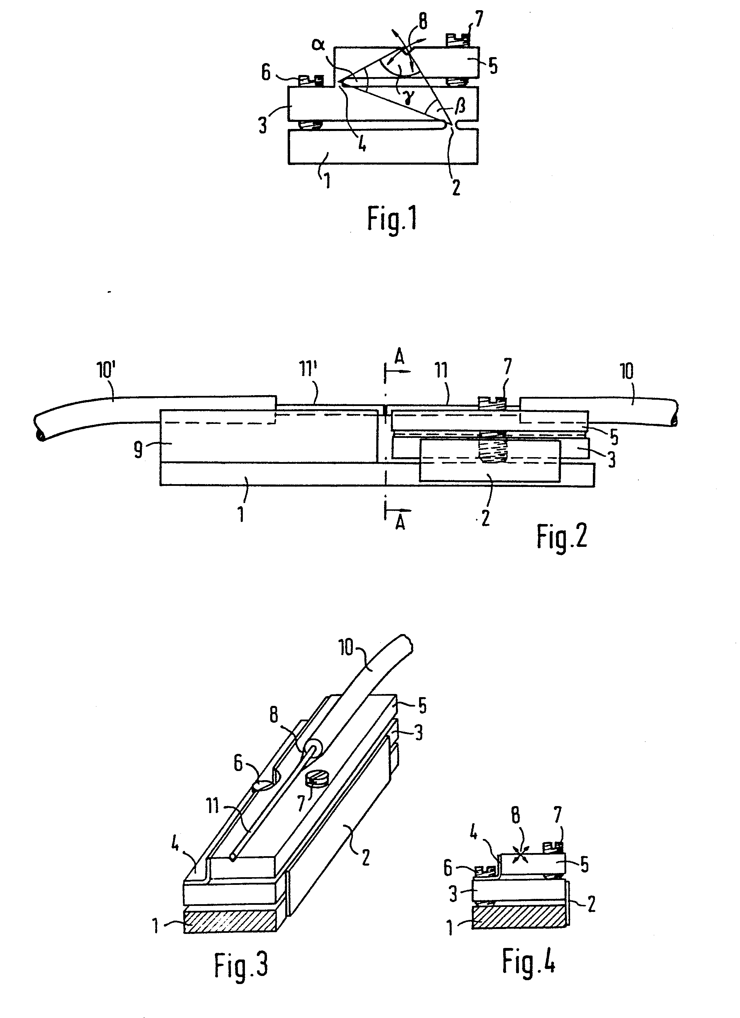

Die in Fig. 1 schematisch dargestellte Vorrichtung besteht
im wesentlichen aus drei einen Abstand zueinander aufweisenden und gelenkig miteinander verbundenen rechteckigen Platten
sowie zwei Justierschrauben. Die untere erste Platte dient
als Grundplatte 1, welche über ein im Bereich einer Längsseite vorgesehenes erstes Gelenk 2 mit der darüber angeordneten zweiten Platte verbunden ist, die eine Zwischenplatte 3
darstellt. Die Zwischenplatte 3 ist im Bereich der Längsseite, die derjenigen des zuvor erwähnten Gelenkes 2 gegenüberliegt, über ein zweites Gelenk 4 mit der darüber angeordneten dritten Platte verbunden, welche als Trägerplatte 5
ausgebildet ist.

In der Zwischenplatte 3 steckt eine gegen die Grundplatte 1
angreifende Justierschraube 6 und in der Trägerplatte 5
eine weitere gegen die Zwischenplatte 3 angreifende Justier-

R.Roßberg-10/11

schraube 7. Beide Justierschrauben 6, 7 sind jeweils im Bereich der den Gelenken 2, 4 gegenüberliegenden Längsseiten von Zwischen- und Trägerplatte 3, 5 angeordnet.

Für das zu positionierende Objekt enthält die Trägerplatte 5 eine Aufnahme 8, welche beispielsweise als V-Nut zum Einlegen eines Lichtwellenleiters, als Ausnehmung zum Einsetzen des Gehäuses eines optoelektronischen Bauelementes oder auch als Rahmen für die Halterung einer Kugellinse ausgebildet ist.

Zur Erzielung maximaler Justierergebnisse wird eine Ausbildung der Vorrichtung angestrebt, bei der die Verschiebewege des Objektes orthogonalen Bewegungen möglichst nahekommen. Daher werden die Positionen von Objekt und Schwenkachsen so angeordnet, daß deren Koordinaten die Eckpunkte eines rechtwinkligen Dreiecks bilden, wobei der Abstand der Schwenkachsen die Hypothenuse des Dreiecks bildet. Aus diesem Grund ist bei allen Ausführungsbeispielen der Verschiebevorrichtung das die erste Schwenkachse aufweisende bewegbare zweite Gelenk 4 im Scheitelpunkt des Winkels $\alpha$ und das die zweite Schwenkachse aufweisende ortsfeste erste Gelenk 2 im Scheitelpunkt des Winkels $\beta$ angeordnet. Außerdem ist die Objektaufnahme so ausgebildet, daß seine Mittelachse, welche mit der des zu justierenden Objektes zusammenfällt, annähernd im Scheitelpunkt des rechten Winkels $\gamma$ zu liegen kommt. Die Gelenke 2, 4 und die Aufnahme 8 für das Objekt weisen vorzugsweise eine Anordnung auf, bei der die Schwenkachsen und die Mittelachse der Objektaufnahme in horizontaler und in vertikaler Richtung zueinander versetzt sind. Dies ist zweckmäßig, um einerseits kleine Abmessungen der Vorrichtung zu ermöglichen und andererseits noch relativ lange Habelarme für die Schwenkteile zu erhalten. Beim Betätigen der mit Feingewinde versehenen Justierschrauben 6, 7 werden Zwischen- und Trägerplatte

R.Roßberg-10/11

3, 5 geschwenkt und ein in der Aufnahme 8 fixiertes Objekt hierbei in Richtung der X- und der Y-Koordinate verschoben.

Bei der Vorrichtung gemäß Fig. 1 bestehen die Grund-, Zwischen- sowie Trägeplatte 1, 3, 5 und beide Gelenke 2, 4 aus einem einzigen Teil. Die einzelnen Platten sind hier durch eingeschnittene Schlitze voneinander separiert, wobei unzertrennt bleibende Stegverbindungen die Gelenke bilden.

Die in Fig. 2 bis 4 dargestellte Vorrichtung ist in einer Anordnung zum Herstellen von Spleißverbindungen verwendbar, aus der das Lichtleitkabel 10, 10' nach dem Verschmelzen seiner Faserenden wieder herausgenommen wird. Die Vorrichtung kann aber auch selbst Teil der Leitungsverbindung mit in der Vorrichtung bleibend fixierten Lichtwellenleitern 11, 11' sein. Zwischen- und Trägerplatte 3, 5 sind hier am Ende einer verlängert ausgeführten Grundplatte 1 angeordnet, deren anderes Ende mit einem Aufsatz 9 versehen ist. Dieser Aufsatz 9 enthält eine Aufnahme mit darin lösbar fixiertem Lichtleitkabel 10', dessen Lichtwellenleiter 11' mit dem zu verbindenden Lichtwellenleiter 11 des in der Trägerplatte 5 lösbar fixierten Lichtleitkabels 10 annähernd fluchtet.

Bei der vorliegenden Vorrichtung besteht das die Grund- mit der Zwischenplatte 1, 3 verbindende Gelenk 2 aus einem mechanisch stabilen, ebenen Federblech, das mittels üblicher Verbindungstechniken an den Längsseiten der genannten Platten 1, 3 befestigt ist. Das die Zwischen- mit der Trägerplatte 3, 5 verbindende Gelenk 4 besteht ebenfalls aus einem einfachen Federblech, das jedoch als Winkelschiene ausgebildet und mit einem Schenkel auf der Zwischenplatte 3 und mit dem anderen Schenkel an der Längsseite der schmaler ausgeführten Trägerplatte 5 befestigt ist.

0129048

R.Roßberg-10/11

Der Aufsatz 9 und die Träger- sowie Zwischenplatte 5, 3 weisen einen ausreichend großen Abstand zueinander auf, so daß die von beiden Seiten überstehenden Enden der Lichtwellenleiter 11, 11' nach ihrer genau fluchtenden Ausrichtung ungehindert miteinander verschmolzen und danach aus der Vorrichtung entnommen werden können. Sind die für das Verschmelzen der Faserenden erforderlichen Einrichtungen nicht verfügbar, wie beispielsweise im Feldeinsatz, so verbleiben die Lichtleitkabel 10, 10' in der Vorrichtung. Zur besseren Transmission der Lichtwellen kann jedoch zwischen die Faserstirnflächen eine Immersionsflüssigkeit oder ein transparenter Kleber eingebracht werden. Derartige Verbindungen zeichnen sich durch eine niedrige Koppeldämpfung aus, da die Faserenden Kern auf Kern ausrichtbar sind. Wegen der erreichbaren hohen Positioniergenauigkeit ist die Vorrichtung nicht nur für Verbindungen von Gradientenfasern sondern auch für Monomodefasern geeignet.

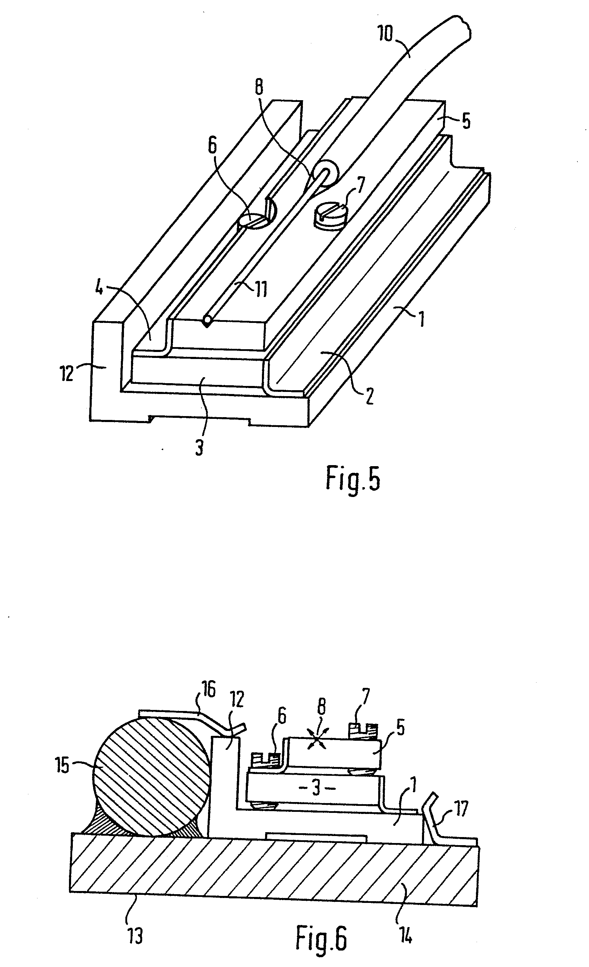

Das in Fig. 5 und 6 dargestellte Ausführungsbeispiel der Vorrichtung ist für die Herstellung von Steckverbindungen ausgestaltet. Es wird eine Winkelschiene verwendet, deren einer Schenkel die Grundplatte 1 bildet. Auf dieser sind die Zwischen- und die Trägerplatte 3, 5 mit dem in der Aufnahme 8 fixierten Lichtwellenleiter 11 angeordnet. Die Gelenke 2, 4 beider Platten 3, 5 bestehen aus je einem rechtwinklig gebogenen Federblech. Der andere, von der Grundplatte 1 vorzugsweise rechtwinklig hochstehende Schenkel 12 der Winkelschiene ist von kürzerer Länge. Seine Außenseite und die Unterseite der Grundplatte 1 weisen geschliffene Oberflächen auf, die bei der Herstellung von Steckverbindungen als Referenzflächen dienen.

Die in Fig. 6 gezeigte Steckerfassung 13, welche zur Halterung und gegenseitigen Ausrichtung von zwei einsetzbaren Steckvorrichtungen ausgebildet ist, besteht im wesentlichen

R.Roßberg-10/11

aus einer ebenen Grundplatte 14 mit geschliffener Oberfläche und einem darauf entlang einer Längskante liegend befestigten zylindrischen Stab 15. Die Oberfläche der Grundplatte 14 und die ebenfalls geschliffene Mantelfläche des als Anschlag dienenden Stabes 15 bilden für die Steckvorrichtungen eine komplementäre Referenzfläche und -Linie. Hiergegen werden die von entgegengesetzten Seiten eingeschobenen Steckvorrichtungen, mittels geeigneter Federelemente 16, 17 angedrückt. Zweckmäßigerweise ist auf dem zylindrischen Stab 15 der Steckerfassung 13 für jede Steckvorrichtung ein separates Federelement 16 befestigt, das mit seinem Federende von oben auf den hochstehenden Schenkel 12 der Steckvorrichtung drückt. Analog dazu sind auf der Grundplatte 14 der Steckerfassung 13 ebenfalls zwei getrennte Federelemente 17 befestigt, die jeweils gegen die obere freie Längskante der Steckvorrichtungs-Grundplatte 1 drücken.

Eine derartige Steckverbindung bietet den Vorzug, daß jede der Verbindungshälften eine Justiervorrichtung aufweist, mit der die Lichtleitfaser auf ein Normal (Faser oder Fadenkreuz) ausgerichtet werden kann. Dadurch sind die Stecker untereinander vertauschbar, ohne daß sie erneut einjustiert werden müssen. Die Einzelteile der Steckverbindung lassen sich einfach herstellen und montieren. Das sonst übliche Einfädeln der Lichtleitfaser in Hülsen oder eng tolerierte Bohrungen entfällt, weil die Faser ohne Gefahr des Stauchens oder Beschädigung ihrer Stirnfläche nur in eine offene Nut eingelegt wird und darin wegen der unmittelbaren Zugänglichkeit ohne Umstände fixiert werden kann. Dies ist mittels eines einfachen Klebeverfahrens vornehmbar, bei dem kein Unterdruck zur Ansaugung des Klebers durch eine Bohrung notwendig ist und daher auch keine Entmischung von Kleber und Füllstoff auftreten kann. Außerdem ist die Klebestelle visuell ohne weiteres auf den eventuellen Einschluß von

Luftblasen prüfbar, wodurch eine leichte Qualitätskontrolle
möglich ist. Da die Faser mit zuvor präparierter Stirnfläche in die Aufnahme der Steckvorrichtung eingeklebt werden kann, entfällt das sonst nachträglich erforderliche
Schleifen und Polieren der Faserendfläche. Außerdem kann
die Faserstirnfläche wenige /um von der Vorderkante der Steckvorrichtung zurückgesetzt werden, wodurch im gesteckten Zustand eine direkte Berührung der beiden Faserstirnflächen
vermieden wird. Weil die Justierschrauben wegen der in der
Regel vorgespannten Gelenkfedern spielfrei bewegbar sind,
tritt beim Fixieren der Faserposition kein Dejustieren auf.

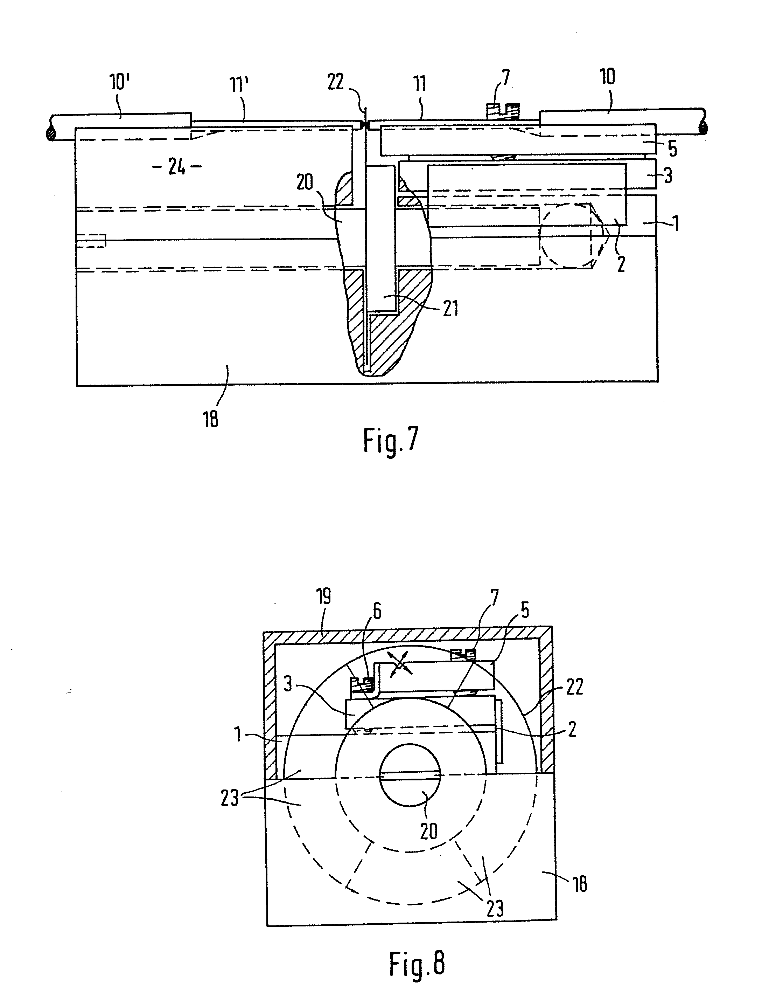

In Fig. 7 und 8 ist die Vorrichtung integraler Bestandteil
eines auf einem Sockel 18 mit entfernbarer Abdeckung 19 aufgebauten optischen Dämpfungsgliedes. In dem Sockel 18 ist
eine mittels Schraubendrehers von außen betätigbare Welle 20
gelagert. Die Welle 20 ist mit einem Bund 21 versehen, der
als Anlage und zur Führung eines scheibenförmigen Neutralfilters 22 dient, das in Umfangsrichtung verteilt mehrere
Bereiche 23 mit Graufiltern unterschiedlicher Dämpfung aufweist.

Das Neutralfilter 22 ist etwa in der Mitte des Sockels 18
angeordnet, dessen eine Hälfte die Vorrichtung trägt. Die
Grundplatte 1 der Vorrichtung ist fest mit dem Sockel 18
verbunden, sie kann aber auch aus diesem selbst bestehen.
In diesem Fall ist die Zwischenplatte 3 über das als Gelenk
2 fungierende Federblech unmittelbar an dem Sockel 18 befestigt.

Die andere Sockelhälfte trägt einen Aufsatz 24 mit V-förmig
eingearbeiteter Aufnahme und darin fixiertem Lichtleitkabel
10', dessen vom äußeren Kabelmantel befreiter und stirnseitig mit einer Linse versehener Lichtwellenleiter 11' mit
dem in der Vorrichtung befestigten Lichtwellenleiter 11,

0129048

R.Roßberg-10/11

welcher stirnseitig ebenfalls mit einer Linse versehen ist, annähernd fluchtet. Mittels der Verschiebevorrichtung können nun die Faserachsen sehr genau fluchtend aufeinander ausgerichtet werden, so daß das in einstellbaren Stufen oder gegebenenfalls kontinuierlich veränderbare Dämpfungsglied eine äußerst geringe Grunddämpfung aufweist.

Wie Fig. 9 und 10 zeigen, umfaßt die als Rahmen ausgebildete Aufnahme 8 eine z.B. durch Einkleben befestigte Kugellinse 9'. Die Kugellinse 9' kann natürlich auch durch Bördeln der entsprechend gestalteten Innenränder des Rahmens, durch Einkleben in eine Ansenkung der Trägerplatte 5 oder mittels anderer üblicher Befestigungsarten an der Vorrichtung gehaltert sein.

In Fig. 10 sind zwei je eine Kugellinse 9', 9" aufweisende Vorrichtungen mit Abstand zueinander so auf der Grundplatte 10" eines als optisches Dämpfungsglied ausgebildeten mechanischen Bauteiles 11" angeordnet, daß sich vor den Stirnflächen der Enden von zwei axial aufeinander ausgerichteten Lichtwellenleitern 12', 12" je eine Kugellinse 9', 9" befindet, zwischen die ein nicht dargestelltes Neutralfilter eingeschwenkt wird. Die Lichtwellenleiter 12', 12" sind an ihren Enden jeweils über eine Teillänge von ihrem äußeren Kabelmantel 13', 13" befreit und zweckmäßigerweise zusammen mit einer Teillänge des Kabelmantels in entsprechend ausgebildete V-Nuten 14', 14" von Kabelhaltern 15', eingeklebt. Letztere können aus Sockeln bestehen, die einstückiger Bestandteil der Grundplatte 10" oder als separate Teile an der Grundplatte befestigt sind.

Vor dem Einkleben der Lichtwellenleiter 12', 12" in die V-Nuten 14', 14" werden ihre Leiterenden bis nahe an die Kugeloberflächen der Linsen herangebracht und provisorisch fixiert. Danach wird jeweils die Kugelmitte durch Betätigen

0129048

R.Roßberg-10/11

der Justierschrauben 6, 7 auf die Achse des Lichtwellenleiters 12', 12" ausgerichtet. Dann werden die Stirnflächen
durch axiales Verschieben der Lichtwellenleiter 12', 12"
in den jeweiligen Brennpunkt der Kugellinsen 9', 9" gebracht und in dieser Lage in geeigneter Weise festgelegt,
z.B. durch Kleben, Löten etc.

Zur Verminderung von Reflexionsverlusten werden vorzugsweise einseitig entspiegelte Kugellinsen 9', 9" verwendet
und der Raum zwischen den Leiterenden und den Kugeloberflächen mit einem im Brechungsindex angepaßten transparenten Kleber gefüllt; und zwar, bevor die Enden der Lichtwellenleiter 12', 12" in den jeweiligen Brennpunkt der
Kugellinsen 9', 9" gebracht werden. Dies bietet den Vorteil,
Lichtwellenleiter verwenden zu können, deren endseitige
Stirnflächen aus einfach herstellbaren 90°-Brüchen bestehen,
die zusätzlich weder geschliffen noch poliert zu werden
brauchen.

Die Kabelhalter 15' mit ihren V-Nuten 14', 14" gewährleisten
außerdem eine fluchtende Anordnung der Lichtwellenleiter 12',
12", zwischen deren Achsen keine Winkelfehler auftreten. Obwohl zur Herstellung der beschriebenen Vorrichtung praktisch
keine Präzisionsteile benötigt werden, gestattet sie die
Übertragung einer maximalen Lichtleistung, wobei zwischen
den beiden Kugellinsen 9', 9" ein angenähert paralleler
Strahlengang erzielt wird. Auf diese Weise ist mit einfachen
Mitteln ein optisches Dämpfungsglied mit niedriger Grunddämpfung herstellbar.

STANDARD ELEKTRIK LORENZ

AKTIENGESELLSCHAFT

Stuttgart


R.Roßberg-10/11


Patentansprüche


1. Vorrichtung zur spielfreien Verschiebung von Objekten in einem Koordinatensystem mit wenigstens zwei Verschiebewegen, beispielsweise zum Ausrichten der Stirnflächen oder Längsachsen von optoelektronischen Bauelementen und/oder Lichtleitfasern, bei der das zu positionierende Objekt mittels Justierschrauben um die Achse eines ersten Schwenkteiles bewegbar ist, das seinerseits um die versetzte Achse eines auf einer Unterlage gelagerten zweiten Schwenkteiles bewegbar ist, dadurch gekennzeichnet, daß die Unterlage und die Schwenkteile aus drei einen Abstand zueinander aufweisenden und gelenkig miteinander verbundenen Platten bestehen, die eine Grundplatte (1), eine Zwischenplatte (3) und eine Trägerplatte (5) bilden, wobei die Grundplatte (1) über ein im Bereich einer Längsseite vorgesehenes erstes Gelenk (2) mit der darüber angeordneten Zwischenplatte (3) verbunden ist, die im Bereich auf der dem ersten Gelenk (2) gegenüberliegenden Längsseite über ein zweites Gelenk (4) mit der darüber angeordneten Trägerplatte (5) verbunden ist, und daß die Zwischen- und die Trägerplatte (3, 5) zum Ausführen der Schwenkbewegungen von je einer Justierschraube (6, 7) betätigbar sind, welche jeweils im Bereich der den Gelenken (2, 4) gegenüberliegenden Längsseiten angeordnet sind.


ZT/P1-Ka/V

08.05.1984

R.Roßberg-10/11

2. Vorrichtung nach Anspruch 1, dadurch gekennzeichnet, daß die Schwenkachsen der Gelenke (2, 4) von Zwischen- und Trägerplatte (3, 5) sowie die Mittelachse der Objektaufnahme (8) in horizontaler und in vertikaler Richtung zueinander versetzt angeordnet sind.

3. Vorrichtung nach Anspruch 1 oder 2, dadurch gekennzeichnet, daß die Gelenke (2, 4) aus Federblechen bestehen.

4. Vorrichtung nach Anspruch 1 oder 2, dadurch gekennzeichnet, daß die Grund-, Zwischen- sowie Trägerplatte (1, 3, 5) und beide Gelenke (2, 4) aus einem durch eingeschnittene Schlitze gebildeten Teil bestehen.

5. Vorrichtung nach einem der Ansprüche 1 bis 4, dadurch gekennzeichnet, daß ein verlängerter Teil der Grundplatte (1) einen Aufsatz (9) trägt, welcher mit einer Aufnahme für ein Lichtleitkabel (10') versehen ist, die mit der in der Trägerplatte (5) enthaltenen Aufnahme (8) annähernd fluchtet.

6. Verwendung der Vorrichtung nach einem der Ansprüche 1 bis 5 in einer Anordnung zum Herstellen einer permanenten Spleißverbindung zwischen zwei Lichtwellenleitern (11, 11').

7. Vorrichtung nach einem der Ansprüche 1 bis 4, dadurch gekennzeichnet, daß die Grundplatte (1) aus einer Winkelschiene besteht, deren beide Schenkel außen geschliffene Oberflächen aufweisen.

8. Verwendung der Vorrichtung nach einem der Ansprüche 1 bis 4 oder 7 in einer Anordnung zum Herstellen einer lösbaren Steckverbindung zwischen zwei Lichtleitkabeln (10, 10').

R.Roßberg-10/11

9. Vorrichtung zum Herstellen von lösbaren Steckverbindungen nach einem der Ansprüche 1 bis 4, 7 oder 8, gekennzeichnet durch eine Grundplatte (14) mit darauf entlang einer Längskante liegend befestigtem zylindrischen Stab (15), durch wenigstens ein auf dem Stab (15) befestigtes Federelement (16), das bei eingesetzter Steckvorrichtung auf deren hochstehenden Schenkel (12) drückt und durch wenigstens ein auf der Grundplatte (14) befestigtes Federelement (17), das bei eingesetzter Steckvorrichtung gegen die obere freie Längskante des auf der Grundplatte (14) liegenden Schenkels angedrückt ist.

10. Verwendung der Vorrichtung nach einem der Ansprüche 1 bis 5 in einem optischen Dämpfungsglied zum fluchtenden Ausrichten der Faserachsen von zwei Lichtwellenleitern (11, 11').

11. Vorrichtung nach einem der Ansprüche 1 bis 4, dadurch gekennzeichnet, daß die Trägerplatte (5) mit einer eine Kugellinse (9') haltenden Aufnahme (8) versehen ist, und daß zwei solche Kugellinsen (9', 9") aufweisende Vorrichtungen mit Abstand zueinander so auf der Grundplatte (10") eines optischen Bauteiles (11") angeordnet sind, daß sich vor den Stirnflächen der Enden von zwei axial aufeinander ausgerichteten Lichtwellenleitern (12', 12") je eine Kugellinse (9', 9") befindet, zwischen die ein Neutralfilter einschwenkbar ist.

12. Vorrichtung nach einem der Ansprüche 1 bis 4 und 11, dadurch gekennzeichnet, daß die Aufnahme (8) der Trägerplatte (5) aus einem die Kugellinse (9', 9") haltenden Rahmen besteht.

13. Vorrichtung nach einem der Ansprüche 1, 11 oder 12, dadurch gekennzeichnet, daß die Enden der Lichtwellenleiter (12', 12") und die Kugellinsen (9', 9") durch einen transparenten Kleber miteinander verbunden sind.

Fig.1

Fig.2

Fig.3

Fig.4

R.Roßberg—10/11

**Fig.5**

**Fig.6**

R Roßberg –10/11

Fig.7

Fig.8

R.Roßberg – 10/11

Fig.9

Fig.10

R Roßberg - 10/11